# EUROPÄISCHE PATENTSCHRIFT

(11) **EP 0 405 435 B1**
(45) Veröffentlichungstag und Bekanntmachung des Hinweises auf die Patenterteilung: **28.04.1993**
(21) Anmeldenummer: 90112111.1
(22) Anmeldetag: 26.06.1990
(51) Int. Cl.: G01N 27/28

(54) **Diffusionsbarriere mit Temperaturfühler für einen elektrochemischen Gassensor**
Diffusion barrier with temperature sensor for an electrochemical gas sensor
Barrière de diffusion avec une sonde de température pour un senseur électrochimique de gaz

(30) Priorität: 30.06.1989 DE 3921526
(43) Veröffentlichungstag der Anmeldung: 02.01.1991
(73) Patentinhaber: Drägerwerk Aktiengesellschaft, 23542 Lübeck (DE)
(72) Erfinder: Matthiessen, Hans, D-2407 Bad Schwartau (DE)

(56) Entgegenhaltungen:
- DE-A- 1 910 964
- GB-A- 1 440 762
- GB-A- 2 169 715

## Beschreibung

Die Erfindung betrifft eine Meßzelle für einen elektrochemischen Gassensor, in deren Gehäuse ein Elektrolytraum vorgesehen ist, welcher mindestens eine Meßelektrode und eine Gegenelektrode aufnimmt, und der gegenüber der zu untersuchenden Umgebung mit einer für die nachzuweisende Substanz durchlässigen, den Elektrolyten zurückhaltenden porösen Membran abgetrennt ist, welcher eine mit Durchlässen versehene Diffusionsbarriere zur Umgebung hin vorgelagert ist.

Eine derartige Meßzelle ist aus der GB-A 2 094 005 bekannt.

Die bekannte Meßzelle arbeitet nach dem amperometrischen Prinzip, nach dem die durch die Membran diffudierenden Gasmoleküle im Elektrolyten eine elektrochemische Reaktion einleiten, welche über einen Meßabgriff an den Elektroden zu einem Meßsignal verarbeitet werden kann. Die Umsatzrate der Gasprobe ist temperaturabhängig, so daß die Empfindlichkeit der Sensoren sich mit der Temperatur ändert. Diese Temperaturabhängigkeit ist zudem häufig noch vom Alter der Sensoren abhängig und auch bei gleicher Sensorart, d. h. bei dem für den Nachweis einer spezifischen Gasart geeigneten Sensorkonfiguration (Elektrolyt, Elektrodenmaterial), noch von Meßzelle zu Meßzelle verschieden. Zur Erzielung einer konstanten Empfindlichkeit ist es bekannt, die Sensoren zu heizen und auf einer konstanten Temperatur zu halten. Nachteilig bei dieser Methode ist, daß dazu Energie verbraucht wird, die zum Beispiel bei tragbaren Gasmeßgeräten aus einer Batterie entnommen werden muß und daher nicht unbegrenzt zur Verfügung steht. Eine weitere bekannte Methode besteht darin, an geeigneter Stelle einen Temperatursensor anzubringen, dessen Temperatursignal entweder analog in einem Vorverstärker oder digital in einem Software-unterstützten Mikroprozessor verarbeitet und das Meßsignal entsprechend kompensiert wird (Temperaturkompensationsmethode). Bei dieser Methode ist es von Nachteil, daß man den Temperatursensor nicht in unmittelbare Nähe der den Temperaturgang verursachenden Baugruppe bringen kann. Diese Baugruppe besteht aus der porösen Membran, der katalytischen Meßelektrode und dem Elektrolyt. Eine thermische Ankopplung eines Temperatursensors an diese Baugruppe gelingt nur unvollkommen. Da die tragbaren Geräte an unterschiedlichen, wechselnden Einsatzorten eingesetzt werden, gibt es bei starken Temperatursprüngen unvermeidbare Temperaturgradienten, die zu unzulässigen Abweichungen führen, da ein Temperaturausgleich innerhalb der Meßzelle einen wesentlich längeren Zeitabschnitt benötigt, als für den Meßvorgang selbst erforderlich ist. Somit wird in diesen Fällen der Meßvorgang mit einer Meßzelle durchgeführt, welche nicht im thermischen Gleichgewicht zur Meßgastemperatur steht. DE 1910964 bezieht sich auf einer Zelle deren Temperaturfühles sich auf einer Elektrode befindet. Bei der bekannten Meßzelle wird über die Membran zur Umgebung hin eine Diffusionsbarriere vorgeschaltet, welche einerseits eine Beruhigung für die Strömung der Meßgasprobe bewirken soll, andererseits durch ihre Ausgestaltung in Verbindung mit den Meßzelleneigenschaften für eine Begrenzung der Diffusionsströmung sorgen soll. GB 2169715 bezieht sich auf einem Gassensor dessen Temperatur empfindliche Element zwischen der Diffusionsbarriere und der enzigen Electrode liegt

Da die Temperaturabhängig der Diffusion durch die Diffusionsbarriere bei diffusionsbegrenzter Meßanordnung der wesentliche Einflußfaktor für eine genügend hohe Meßgenauigkeit ist, liegt der Erfindung die Aufgabe zugrunde, eine Meßzelle der genannten Art so zu verbessern, daß die Temperaturabhängigkeit des Diffusionsvermögens der Gasprobe durch die Diffusionsbarriere bei der Signalverarbeitung einbezogen werden kann.

Die Lösung der Aufgabe erfolgt dadurch, daß die Diffusionsbarriere aus thermisch gut leitfähigem Material besteht und in der Nähe der Durchlässe zur Umgebung hin mit einem temperaturempfindlichen Element versehen ist.

Mit dieser Anordnung ist es möglich, daß bei Temperaturänderungen der Diffusionsbarriere, welche der Umgebungsluft unmittelbar ausgesetzt ist, diese als erste die Temperatur der Umgebung annimmt. Dabei braucht die Meßzelle selbst diese Umgebungstemperatur noch nicht angenommen zu haben. Sogar wenn die Diffusionsbarriere die Umgebungstemperatur noch nicht angenommen hat, kann bei entsprechender Gestaltung der Durchlässe, d. h. bei einer wesentlich größeren Durchlaßlänge im Vergleich zu ihrem Durchmesser, das hindurchdiffundierende Gas die Temperatur der Scheibe annehmen. Dadurch ist die Diffusionsrate durch die Scheibentemperatur bestimmt. Das temperaturempfindliche Element nimmt somit die "Diffusionstemperatur" auf, welche am Orte der Diffusionsbarriere als einzige Variable maßgeblich für die Diffusionsrate ist. Durch entsprechende Signalverarbeitung im Auswertegerät kann diese Diffusionstemperatur zur Korrektur des Meßsignals herangezogen werden. Man erhält somit einen Gassensor, dessen Meßsignal unabhängig von der Meßgastemperatur ist. Die Temperaturkompensation kann mit einfachen Mitteln und zuverlässig durchgeführt werden. Das temperaturempfindliche Element ist unmittelbar an dem Ort des Temperatureinflusses für die Diffusionsrate angebracht. Man braucht daher die übrigen Teile der Meßzelle nicht im Hinblick auf gute Temperaturleitfähigkeit auszulegen und kann deswegen auf bewährte, preisgünstige und einfach herzustellende Gehäuse aus Kunststoff zurückgreifen.

Um eine möglichst umfassende, über die gesamte Fläche der Diffusionsbarriere integrierende Temperaturerfassung zu ermöglichen, ist es zweckmäßig, das temperaturempfindliche Element als eine auf der Diffusionsbarriere und um ihre Durchlässe geführte bahnförmige Schicht aufzutragen. Dadurch kann man die für den Diffusionsverlauf geeignete Anzahl und Anordnung von Durchlässen festlegen und die temperaturempfindliche Schicht um die Durchlässe und sogar zwischen ihnen durch anordnen.

Eine besonders einfache Ausgestaltung der temperaturempfindlichen Schicht ist dadurch möglich, daß sie als eine durchgehende Schicht auf der Diffusionsbarriere aufgetragen ist und die Durchlässe zumindest teilweise überzieht, wobei die Schicht mit Durchbrüchen versehen ist, welche mit den Durchlässen fluchtend angeordnet sind. Somit ist die temperaturempfindliche Schicht als Teil der Diffusionsbarriere ausgebildet, und sowohl Durchlässe als auch Durchbrüche dienen als Diffusionsweg für das Meßgas. Auf diese Weise ist eine noch innigere Verknüpfung der Temperaturempfindlichkeit mit dem Diffusionsvermögen des Gases ermöglicht.

Zweckmäßigerweise wird die Diffusionsbarriere aus Keramik, und das temperaturempfindliche Element aus einer NTC-Schicht hergestellt. Die Durchlässe in der Keramikscheibe sind z.B. mittels eines Lasers eingebohrt. Um diese Durchlässe herum kann dann in Dickschichttechnik ein NTC-Netzwerk aufgetragen werden. Am Rand dieses Netzwerkes sind Lötflächen angeschlossen, um an diesen Anschlußdrähte anzubonden.

Eine andere Ausführungsform besteht darin, eine dünne Siliziumscheibe mit kleinen Durchlässen zu versehen (beispielsweise mittels Laser zu bohren oder hineinzuätzen), auf welcher gleichzeitig ein Temperatursensor in Halbleiter-Silizium-Technik aufgebracht wird.

Eine weitere zweckmäßige Ausführungsform besteht aus einer Diffusionsbarriere aus Metall, welche eine elektrisch isolierende Zwischenschicht trägt, auf der das temperaturempfindliche Element als NTC-Schicht aufgebracht ist. Die elektrisch isolierende Schicht kann eine Glasschicht sein, welche auf der metallischen Diffusionsbarriere in Dickschichttechnik aufgebracht ist, und auf diese die NTC-Schicht ebenfalls in Dickschicht- oder Dünnfilmtechnik aufgetragen ist. Der Durchmesser der Durchlässe kann mit geeigneten bekannten Bearbeitungstechniken, wie z. B. Schwerionenbeschuß mit Ätzprozessen, im Mikrometerbereich erzeugt werden.

Werden Anzahl und Größe der Durchlässe so gewählt, daß die Diffusionsrate der zu messenden Gasprobe durch die Durchlässe deutlich geringer ist als der Verbrauch durch die Aktivität der Meßelektrode, so ist die Empfindlichkeit des Sensors im wesentlichen durch die Diffusionsbarriere bestimmt.

Ein Ausführungsbeispiel der Erfindung wird anhand der schematischen Zeichnung dargestellt und im folgenden näher erläutert.

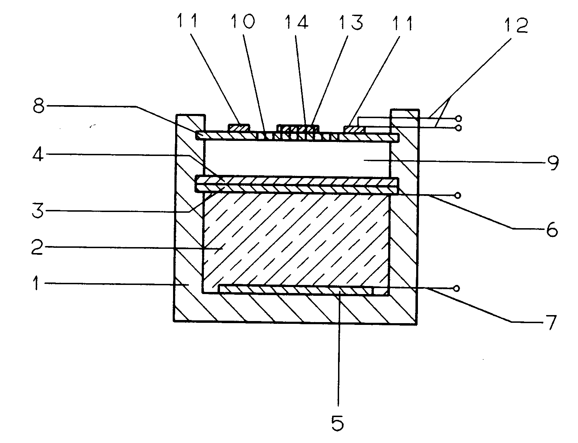

Die einzige Figur zeigt im Schnitt, und nicht maßstäblich, eine Meßzelle eines Gassensors, welche in einem Gehäuse (1) einen mit einem Elektrolyten gefüllten Elektrolytraum (2) aufweist. In dem Elektrolytraum (2) befinden sich eine Meßelektrode (3) auf der elektrolytseitigen Rückseite einer Diffusionsmembran (4) sowie eine Gegenelektrode (5). Die Elektroden (3, 5) besitzen Meßanschlüsse (6, 7), welche durch das Gehäuse (1) durchgeführt und zu einem nicht dargestellten Auswertegerät weitergeleitet werden. Die Diffusionsmembran (4) ist gegenüber der Umgebung, welche das zu untersuchende Gas enthält, durch eine Diffusionsbarriere (8) aus Aluminiumoxid-Keramik abgetrennt. Zwischen Diffusionsbarriere (8) und Diffusionsmembran (4) befindet sich der Meßzellenvorraum (9). Durch die Diffusionsbarriere (8) sind kleine Durchlässe (10) gebohrt oder geätzt, welche wegen der geringen Dimensionierung als einfache Striche dargestellt sind. Zur Umgebung hin sind auf der Diffusionsbarriere (8) in beliebig gewundener bzw. verschlungener Form mehrere Bahnen (11) eines temperaturempfindlichen Elementes aufgedampft. Die Bahnen (11) umgeben die Durchlässe (10) und besitzen Drahtanschlüsse (12), welche ebenfalls durch das Gehäuse (1) hindurchgeführt und dem nicht dargestellten Auswertegerät zugeführt sind. Ein Teil des temperaturempfindlichen Elementes bedeckt teilweise einen Bereich der Durchlässe (10) auf der Diffusionsbarriere (8), wobei in diesem Bereich (13) der temperaturempfindlichen Schicht Durchbrüche (14) angebracht sind, welche sich mit den Durchlässen (10) in einer Fluchtlinie befinden.

## Patentansprüche

1. Meßzelle für einen elektrochemischen Gassensor, in deren Gehäuse ein Elektrolytraum vorgesehen ist, welcher zumindest eine Meßelektrode und eine Gegenelektrode aufnimmt, und der gegenüber der zu untersuchenden Umgebung mit einer für die nachzuweisende Substanz durchlässigen, den Elektrolyten zurückhaltenden porösen Membran (4) abgetrennt ist, welcher eine mit Durchlässen (10) versehene Diffusionsbarriere (8) zur Umgebung hin vorgelagert ist, dadurch gekennzeichnet, daß die Diffusionsbarriere (8) aus thermisch gut leitfähigem Material besteht und in der Nähe der Durchlässe (10) zur Umgebung hin mit einem temperaturempfindlichen Element (11, 13) versehen ist.

2. Meßzelle nach Anspruch 1, dadurch gekennzeichnet, daß das temperaturempfindliche Element als eine auf der Diffusionsbarriere (8) und um ihre Durchlässe (10) geführte bahnförmige Schicht (11) aufgetragen ist.

3. Meßzelle nach Anspruch 1, dadurch gekennzeichnet, daß das temperaturempfindliche Element als eine Schicht (13) die Diffusionsbarriere (8) im Bereich ihrer Durchlässe (10) zumindest teilweise überzieht, und die Schicht (13) mit Durchbrüchen (14) versehen ist, die mit den Durchlässen (10) fluchtend angeordnet sind.

4. Meßzelle nach einem der Ansprüche 1 bis 3, dadurch gekennzeichnet, daß die Diffusionsbarriere (8) aus Keramik und das temperaturempfindliche Element (11, 13) aus einer aufgebrachten temperaturempfindlichen Schicht besteht.

5. Meßzelle nach einem der Ansprüche 1 bis 3, dadurch gekennzeichnet, daß die Diffusionsbarriere (8) aus Metall besteht und eine elektrisch isolierende Zwischenschicht aufweist, auf welche das temperaturempfindliche Element (11, 13) als temperaturempfindliche Schicht aufgebracht ist.

## Claims

1. Measuring cell for an electrochemical gas sensor, provided in the housing of which cell there is an electrolyte chamber which accommodates at least one measuring electrode and a counter-electrode and is separated from the environment to be investigated by a porous membrane (4) which is permeable to the substance to be detected and retains the electrolyte and extended in front of which membrane towards the environment there is a diffusion barrier (8) provided with passages (10), characterised in that the diffusion barrier (8) is made of material with good thermal conductivity and is provided with a temperature-sensitive element (11, 13) in the vicinity of the passages (10), towards the environment.

2. Measuring cell according to claim 1, characterised in that the temperature-sensitive element is applied as a web-like layer (11) which is guided on the diffusion barrier (8), about its passages (10).

3. Measuring cell according to claim 1, characterised in that the temperature-sensitive element as a layer (13) at least in part covers the diffusion barrier (8) in the region of its passages (10), and the layer (13) is provided with openings (14) which are arranged in alignment with the passages (10).

4. Measuring cell according to one of the claims 1 to 3, characterised in that the diffusion barrier (8) is made of ceramics and the temperature-sensitive element (11, 13) consists of a temperature-sensitive layer which is applied thereto.

5. Measuring cell according to one of the claims 1 to 3, characterised in that the diffusion barrier (8) is made of metal and has an electrically insulating intermediate layer onto which the temperature-sensitive element (11, 13) is applied as a temperature-sensitive layer.

## Revendications

1. Cellule de mesure pour un capteur de gaz électrochimique dans le boîtier duquel il est prévu une enceinte électrolytique qui contient au moins une électrode de mesure et une contre-électrode et qui est séparée du milieu ambiant à analyser, par une membrane (4) poreuse laissant passer la substance à déceler, mais retenant l'électrolyte, qui est garnie à l'avant d'une barrière de diffusion (8), par rapport au milieu ambiant, pourvue de passages (10), caractérisée en ce que la barrière de diffusion (8) est réalisée dans un matériau thermiquement bon conducteur et est pourvue, à proximité des passages (10) vers le milieu ambiant, d'un élément (11, 13) sensible à la température.

2. Cellule de mesure selon la revendication 1, caractérisée en ce que l'élément sensible à la température est une couche (11), en forme de bande, appliquée sur la barrière de diffusion (8) et entourant ses passages (10).

3. Cellule de mesure selon la revendication 1, caractérisée en ce que l'élément sensible à la température est une couche (13) qui recouvre au moins en partie la barrière de diffusion (8) dans la zone de ses passages (10) et en ce que la couche (13) est pourvue d'ajours (14) qui sont alignés avec les passages (10).

4. Cellule de mesure selon l'une des revendications 1 à 3, caractérisée en ce que la barrière de diffusion (8) est en céramique et l'élément (11, 13), sensible à la température, est une couche appliquée, sensible à la température.

5. Cellule de mesure selon l'une des revendications 1 à 3, caractérisée en ce que la barrière de diffusion (8) est en métal et présente une couche intermédiaire, électriquement isolante, sur laquelle est appliqué l'élément (11, 13) sensible à la température, sous la forme d'une couche sensible à la température.
